# EUROPEAN PATENT APPLICATION

(11) **EP 2 738 506 A2**
(43) Date of publication of application: **04.06.2014**
(21) Application number: 13194697.2
(22) Date of filing: 27.11.2013
(51) Int. Cl.: F28D 1/047, F28F 1/24

(54) **Heat exchanger and method of manufacturing the same**

(30) Priority: 30.11.2012 KR 20120137984
(71) Applicant: LG Electronics, Inc., Seoul 150-721 (KR)
(72) Inventor: Kim, Juhyok, 153-802 Seoul (KR); Lee, Hanchoon, 153-802 Seoul (KR)
(74) Representative: Vossius & Partner

(57) **Abstract**

A heat exchanger and a method of manufacturing the same are provided. With the heat exchanger and method of manufacturing, a tube (10) may be inserted into a through (20a) hole formed in a fin (20) coated with a filler metal (25), the tube (10) may be expanded using a tube expansion ball, and the tube (10) and the fin (20) may be joined through the filler metal (25) by brazing processing. The tube (10) may be made of aluminum (Al). An interval between an outer circumferential surface of the tube (10) and an inner circumferential surface of the fin collar (21) before expanding the tube (10) may be approximately 0.1 mm or more, and the tube (10) may be expanded so that the interval between the outer circumferential surface of the tube (10) and the inner circumferential surface of the fin collar (21) is approximately 0.1 mm or less. Accordingly, a heat transfer performance of the heat exchanger may be improved.

## Description

A heat exchanger and a method of manufacturing the same are disclosed herein.

Heat exchangers and methods of manufacturing the same are known. However, they suffer from various disadvantages.

The present invention aims to solve the problem of the prior art. In particular, the object of the invention is to provide a heat exchanger and a method of manufacturing the same. The object is achieved by the features defined in the claims.

Embodiments will be described in detail with reference to the following drawings in which like reference numerals refer to like elements, and wherein:
FIG. 1 is a schematic diagram of a heat exchanger using a common fin-tube method;
FIG. 2 is a cross-sectional view of a portion of the heat exchanger of FIG. 1 showing a state in which a tube inserted into a plurality of cooling fins is mechanically expanded by a tube expansion ball;
FIGs. 3A-3B show grooves having or creating projection shapes, processed in an inner circumferential surface of a tube, and deformed by mechanical tube expansion;
FIG. 4 shows a gap generated between a tube and a fin after the tube is mechanically expanded;
FIGs. 5A-5C shows a process of manufacturing a heat exchanger using a fin-tube method in accordance with embodiments;
FIGs. 6A-6B are schematic diagrams illustrating a gap between a fin and a tube and a joining area between a fin collar and the tube according to embodiments;
FIG. 7 is a graph showing a ratio of a gap between a fin and a tube and a joining area between a fin collar and the tube in a heat exchanger fabricated according to embodiments; and
FIG. 8 is a graph showing heat transfer performance of a condenser and an evaporator fabricated according to embodiments compared with that of conventional mechanical tube expansion depending on a different gap between the fin and the tube.

Hereinafter, a heat exchanger and a method of manufacturing the same in accordance with embodiments are described in detail with reference to the accompanying drawings. Where possible, like reference numerals have been used to indicate like elements, and repetitive disclosure has been omitted.

A heat exchange process between two fluids having different temperatures which are separated by a solid wall is utilized in many fields. An apparatus for enabling the transfer of heat between two or more fluids having different temperatures as described above is defined as a heat exchanger.

A detailed product of a heat exchanger may commonly refer to a condenser and an evaporator, that is, elements of a cooling cycle which are installed in an air conditioner, a refrigerator, and a show case, for example. The heat exchanger is used to perform heating or cooling by discharging or absorbing heat in response to a change in a refrigerant, that is, a heat transfer medium, depending on an installation location.

In most heat exchangers used for heating and cooling, a fin-tube method in which a plurality of cooling fins are inserted into a refrigerant pipe (also called tube) is chiefly used. While a refrigerant is circulated within the refrigerant pipe, heat is exchanged between the refrigerant and external air through the refrigerant pipe, and at the same time, a heat exchange area is widely expanded by the plurality of cooling fins closely combined with an outer circumferential surface of the refrigerant pipe, so the heat is rapidly exchanged.

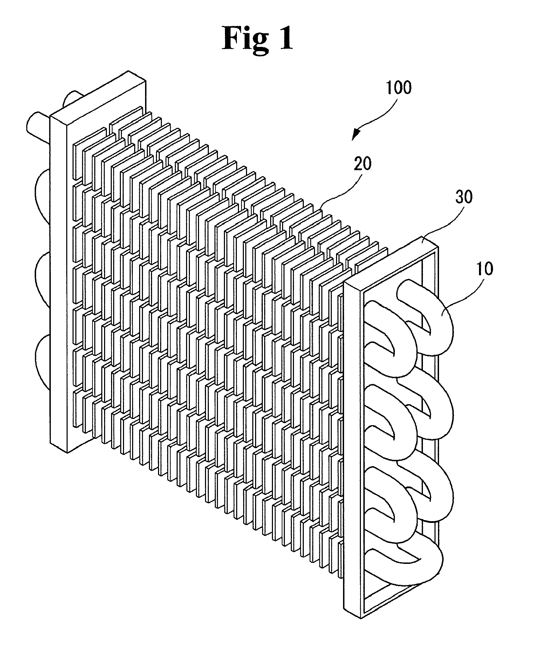

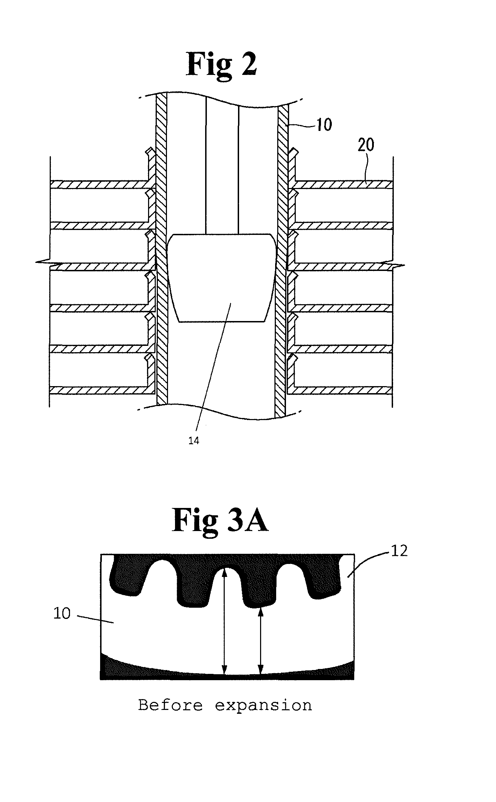

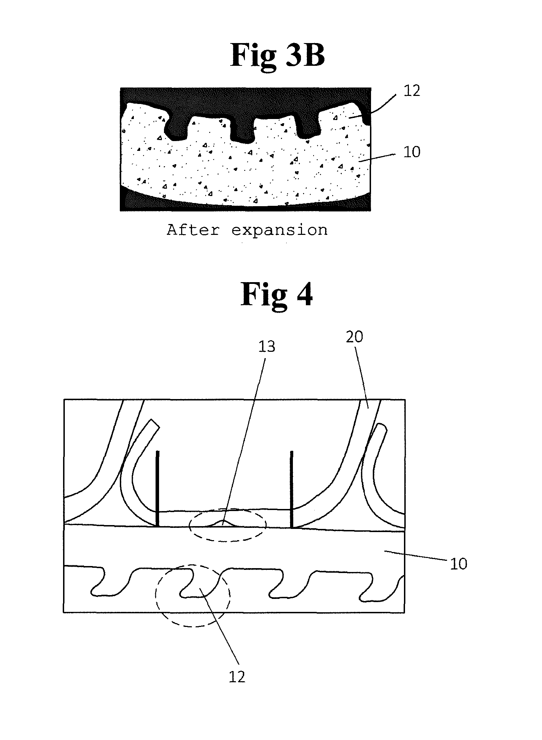

FIG. 1 shows a heat exchanger using a common fin-tube method. FIG. 2 is a cross-sectional view of a portion of the heat exchanger of FIG. 1 showing a state in which a tube inserted into a plurality of cooling fins is mechanically expanded by a tube expansion ball. FIGs. 3A-3B show grooves having or creating projection shapes, processed in an inner circumferential surface of a tube, and deformed by mechanical tube expansion. FIG. 4 shows a gap generated between a tube and a fin after the tube is mechanically expanded

The heat exchanger 100 of FIG. 1 includes a refrigerant pipe (or tube) 10 configured to have a refrigerant pass therethrough and curved in multiple stages, a plurality of cooling fins 20 combined with an outside of the refrigerant tube 10 and configured to improve heat exchange efficiency with air by expanding a heat exchange area, and supports 30 configured to support both ends of the refrigerant tube 10.

In order to reduce contact resistance between the outer circumferential surface of the refrigerant tube 10 and the plurality of cooling fins 20 by means of close coupling between them in a wide contact area, the refrigerant tube 10 is inserted into the plurality of cooling fins 20 and the inserted refrigerant tube 10 is mechanically expanded using a tube expansion ball 14 so that the refrigerant tube 10 is closely adhered to the plurality of cooling fins 20, as shown in FIG. 2. In order to insert the refrigerant tube 10 into the plurality of cooling fins 20, an external diameter of the refrigerant tube 10 needs to be smaller than an internal diameter of a fin collar formed in the plurality of cooling fins 20. In the plurality of cooling fins 20 of FIG. 2, a portion that extends parallel to the outer circumferential surface of the refrigerant tube 10 corresponds to the fin collar.

Further, in order to improve heat transfer performance of a heat exchanger, grooves 12 having or creating projection shapes may be processed in an inner circumference surface of the refrigerant tube 10, that is, a circular pipe, as shown in FIG. 3A. The grooves 12 may be deformed by a mechanical tube expansion process, as shown in FIG. 3B, and such deformation reduces a surface area of the grooves, thereby deteriorating heat transfer performance.

Furthermore, if a fin-tube heat exchanger is fabricated using a mechanical tube expansion method, a gap 13 may be generated between the tube 10 and the fin 20, as shown in FIG. 4, leading to increased contact heat resistance and deteriorated heat transfer performance.

Copper (Cu) is generally used in a tube of a heat exchanger using a fin-tube method. This is because copper (Cu) has advantages in that it has high machinability necessary to form grooves to improve heat transfer efficiency through an increase in a surface area, strength necessary to reduce the crush or deformation of grooves that occurs in an expansion process, and also relatively high heat conductivity.

Metal to replace copper (Cu) is necessary because copper (Cu) is heavy and expensive. Aluminum (Al) is used in a heat exchanger using a MultiFlow (MF) channel method, that is, a kind of heat exchanger whose weight becomes an important factor, for example, in a vehicle. Aluminum (Al) has a lower heat conductivity, poorer machinability, and smaller strength than copper (Cu), but has advantages in that it is lighter and cheaper than copper (Cu).

The direct application of aluminum (Al) to the tube of a heat exchanger using a fin-tube method of joining the tube and the fin through expansion is limited because aluminum (Al) has poorer machinability and smaller strength than copper (Cu). This is because it is difficult to form fine grooves within the tube. Further, heat transfer efficiency is significantly reduced because a surface area within the tube is reduced due to grooves easily crushed or deformed in an expansion process. In a heat exchanger using an MF channel method, an aluminum (Al) tube and aluminum (Al) fins may be joined by a brazing method.

Brazing is described in brief hereinbelow.

Brazing is a technology in which two base metals are joined by applying heat to a filler metal, without damaging the two base metals at melting points or less of the base metals, to be joined at 450°C or more. More particularly, a method of joining two base metals by applying heat at solidus temperature or less of the base metals using a filler metal having a liquidus temperature of 450°C or more may be called brazing.

For reference, joining methods using a filler metal can be divided basically into welding, brazing, and soldering. A difference between the three methods is described below. Soldering refers to a method of joining metals using a filler metal having a melting point of 450°C or less. In welding and brazing, two base metals are joined at a temperature of 450°C or more. In welding, two base metals are joined at melting points or more of the base metals, whereas in brazing, two base metals are joined at melting points or less of the base metals by melting only a filler metal without damaging the base metals.

When brazing is performed, it is ideal that a brazing filler metal is molten between two base metals when a certain temperature (that is, the brazing temperature) is reached. A property indicative of the degree of an affinity between the two base metals and the filler metal can be represented as wetting. A phenomenon in which the brazing filler metal is made to flow between a joint gap between the two base metals can be represented as a capillary action.

In this case, gravity can act, but a main principle of brazing is that when two base metals are joined by applying a filler metal after heating the two base metals, the filler metal is molten between the base metals by way of wetting, and the filler metal flows between the base metals by way of a capillary action. If the wetting of base metals to be brazed by a filler metal is poor, joining will not be performed or accomplished. If a joint gap between two base metals is great, a filler metal is not fully filled between the two base metals, which may lead to incomplete joining.

A capillary action is a very important physical phenomenon in a brazing process. The flowability of a filler metal may depend on force by a capillary action, the viscosity and density of a molten metal, and a location of gravity with respect to a joining surface. In general, viscosity that suppresses the flow of a filler metal is correlated with temperature in a melting state. It can be seen that the flowability of a filler metal rises according to an increase in temperature. A capillary action has a very close relation with a joint gap and also has a very close correlation with the type, viscosity, and density of a solvent, the location of a joining surface, and a heating method, for example.

Brazing is advantageous in that heterogeneous metal parts can be joined; products having different sizes and thicknesses can be easily joined; cost can be reduced; various parts can be designed; joining strength is relatively great in comparison to other joining; additional mechanical processing, such as grinding or filing, is not necessary because a joint is beautiful and fine and thus a clean joint can be obtained after brazing; brazing has characteristics, such as detergence, airtightness, and corrosion resistance; manual handling and automation are easy; and various types of engineering are possible because various filler metals can be formed.

With embodiments disclosed herein, in order to improve heat transfer performance of a heat exchanger by reducing contact resistance between a tube and fins, the fins and the tube inserted into the fins through the through holes of the fins are joined by brazing. In order to facilitate the insertion of the tube and increase capillary force, the tube inserted into the fins is weakly expanded.

The heat exchanger 100 in accordance with an embodiment, as shown in FIG. 1, may include the plurality of fins 20, which may each be configured to have a flat panel shape, one or more tubes 10 configured to penetrate the plurality of fins 20, and supports 30 configured to support both ends of the tubes 10. Unlike in a heat exchanger using an MF channel method, in the heat exchanger according to embodiments disclosed herein, the fins 20 are not placed between the tubes 10, but rather, the tube 10 penetrates the fins 20.

Each fin 20 having a rectangular and flat panel shape may function to increase an area where heat is exchanged between a refrigerant flowing within the tube 10 and an external fluid. The fins 20 may be spaced apart from one another at specific intervals so that neighboring fins face each other.

A through hole 20a into which the tube 10 may be inserted may be formed in each of the fins 20. If a plurality of the tubes 10 are inserted into the through holes 20a, a plurality of the through holes 20a may be formed at an interval equal to a distance at which the tubes 10 are disposed in a lengthwise direction of the fins 20.

A fin collar 21, which may have a tubular shape, may be formed in the fin 20. The fin collar 21 may substantially correspond to an outer circumferential surface of the tube 10 and extend at a substantially right angle to a plane that forms the fin 20. The fin collar 21 may be closely adhered to the outer circumferential surface of the tube 10 that penetrates the fin 20, thus increasing a joining area between the tube 10 and the fin 20.

The tube 10 may be inserted into each of the plurality of fins 20 in a state in which a front end of the fin collar 21 of each fin 20 comes in contact with a neighboring fin 20, and the fins 20 into which the tube 10 has been inserted are spaced apart from each other at an interval corresponding to a height of the fin collar 21. Accordingly, the fin collar 21 may maintain an interval between two neighboring fins 20.

The through hole 20a needs to be formed greater than an external diameter of the tube 10 which will be inserted into the through hole 20a. That is, an internal diameter of the fin collar 21 parallel to the through hole 20a needs to be greater than an external diameter of the tube 10. If the internal diameter of the fin collar 21 is much greater than the external diameter of the tube 10, the tube 10 may be smoothly inserted into the through hole, but joining between the tube 10 and the fins 20 through the fin collars 21 become difficult. If the internal diameter of the fin collar 21 is much smaller than the external diameter of the tube 10, the insertion of the tube 10 may be difficult, and the fins 20 spaced apart from one another at specific intervals may be distorted while inserting the tube 10 into the through holes.

Two or more grooves 12 may be formed in an inner surface of the tube 10 in a lengthwise direction thereof in order to improve heat transfer efficiency. The grooves 12 may be formed parallel in a straight line in the lengthwise direction or may be formed as curved lines in a helical form.

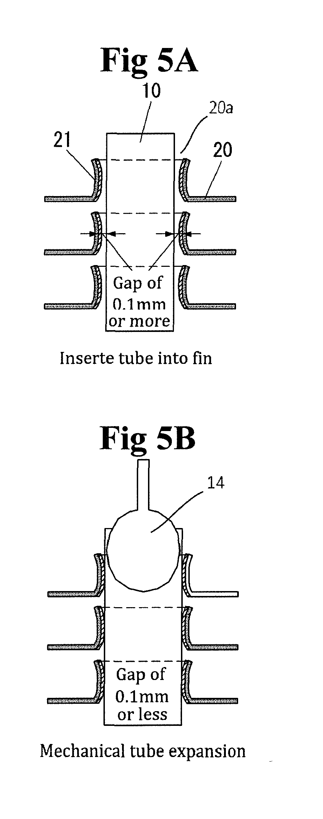

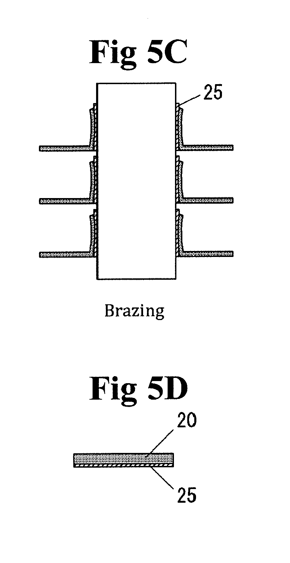

FIGs. 5A-5D show a process of manufacturing a heat exchanger using a fin-tube method in which an expansion processing and brazing processing are combined in accordance with embodiments. A process of fabricating the heat exchanger according to embodiments may basically include a process of inserting a tube into a plurality of fins, a process of mechanically expanding the inserted tube, and a process of joining the plurality of fins and the tube through brazing.

First, the tube 10 may be combined with the plurality of fins 20, which may be stacked and spaced apart from each other at an interval corresponding to the height of the fin collar 21. When the tube 10 sequentially penetrates the through holes 20a formed in the fins 20, the outer circumferential surface of the tube 10 and the inner circumferential surfaces of the fin collars 21 may be oriented so that they are substantially neighbors to or face each other.

In order to smoothly insert the tube 10 into the plurality of fins 20, a specific gap is necessary between the tube 10 and the fins 20. According to embodiments disclosed herein, the through holes 20a and the fin collars 21 of the fins 20 may be formed such that a gap between the inner circumferential surface of the fin collar 21 and the outer circumferential surface of the tube 10 is approximately 0.1 mm or more. Accordingly, the tube 10 may be smoothly inserted into the plurality of stacked fins 20 through the through holes 20a of the fins 20.

Further, if the tube 10 is inserted into the plurality of fins 20 in the state in which such a gap is present and then subject to brazing processing, capillary force is weak because an interval between the fins 20 and the tube 10 is wide and thus a filler metal 25 for joining the fins 20 and the tube 10 may not uniformly spread between the fin 20 and the tube 10. As a result, brazing is not properly performed, and close joining between the fins 20 and the tube 10 may not be accomplished.

With the embodiments disclosed herein, the tube 10 may be mechanically expanded using a tube expansion ball 14 prior to the brazing processing so that the fins 20 and the tube 10 are closely joined. The tube 10 may be weakly expanded to the extent that sufficient capillary force is generated at an interval between the fin 20 and the tube 10 after the tube expansion, for example, so that a gap between the outer circumferential surface of the expanded tube 10 and the inner circumferential surface of the fin collar 21 becomes approximately 0.1 mm or less.

If the tube 10 is weakly expanded, heat transfer efficiency may be less deteriorated because the grooves 12 formed in the inner surface of the tube 10 may be crushed or deformed less. Accordingly, aluminum (Al) having a relatively weaker strength than copper (Cu) may be used in the tube 10.

Further, as the tube 10 is weakly expanded, phenomena in which the fin 20 corresponding to a portion of the tube 10, which is first expanded in the process of expanding the tube 10, digs between the tube 10 and the fin collar 21 of the underlying fin 20 corresponding to a portion of the tube 10, which is subsequently expanded, and an interval between the fins 20 becomes irregular may be reduced. Furthermore, if a phenomenon in which the fins 20 overlap with each other is reduced, an interval between the tube 10 and the fins 20 becomes uniform, and thus, the filler metal may be infiltrated between the tube 10 and the fins 20 by way of uniform capillary force.

After expanding the tube 10, the assembly of the tube 10 and the fins 20 is subject to brazing processing in a brazing furnace, so the tube 10 and the fins 20 are joined. The filler metal 25 for joining the tube 10 and the fins 20 may be coated on a surface of the fins 20, and the filler metal 25 coated on the inner circumferential surfaces of the fin collars 21 of the fins 20 may be molten by brazing processing and then hardened. As a result, the tube 10 and the fin collars 21 may closely be joined.

The filler metal 25 may be coated on both surfaces of the fin 20 made of aluminum (Al), or may be coated on only one surface of the fin 20 which will be joined with the tube 10. In the latter case, the fin collar 21 may be formed by forming a through hole from the surface of the fin 20 on which the filler metal 25 has been coated so that the filler metal 25 is formed on the inner circumferential surface of the fin collar 21. Or, after forming the fin collar 21, the filler metal 25 may be coated on both surfaces of the fin 20 or only on one surface of the fin 20 in which the fin collar 21 is formed. Alternatively, the filler metal 25 may be formed only at a location where the through hole and the fin collar 21 will be formed without coating the filler metal 25 on the entire fin 20.

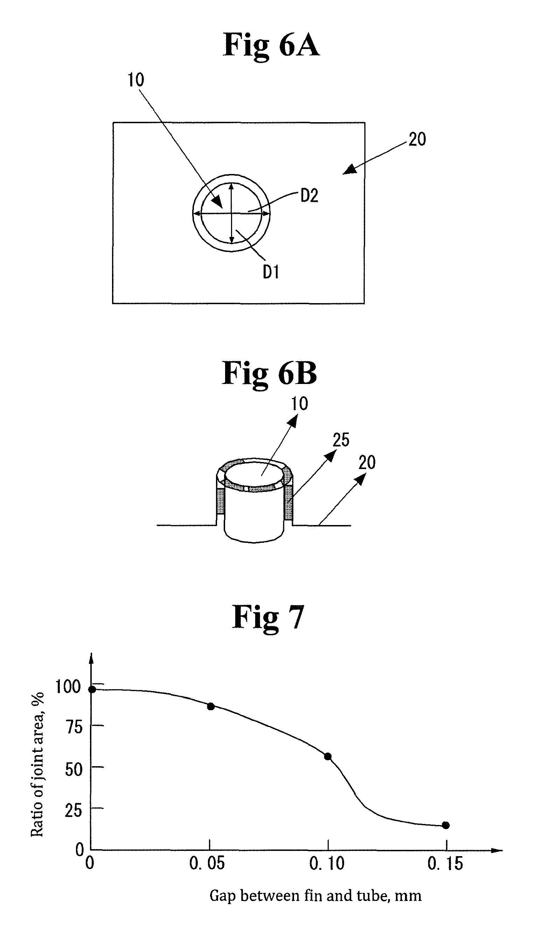

FIGs. 6A-6B are schematic diagram illustrating a gap between the fin and the tube and a joining area between the fin collar and the tube according to embodiments. With the embodiments disclosed herein, when forming the through hole 20a and the fin collar 21 of the fin 20, an interval between the tube 10 and the fin collar 21 may be approximately 0.1 mm or more. After the tube 10 is inserted into the fin 20 through the through hole, an interval between the fin collar 21 and the tube 10 expanded when expanding the tube 10 using the tube expansion ball may be approximately 0.1 mm or less. That is, shown in FIG. 6A-6B, it is advantageous that the tube 10 is expanded so that D2-D1 ≤ 0.1 mm wherein an external diameter of the tube 10 is D1 and an internal diameter of the fin collar 21 is D2.

FIG. 6B shows a state in which the filler metal 25 molten by brazing has joined the outer circumferential surface of the tube 10 and the inner circumferential surface of the fin collar 21. If a gap between the outer circumferential surface of the tube 10 and the inner circumferential surface of the fin collar 21 is uniform after expansion, the joining area may be increased because the filler metal 25 is uniformly infiltrated between the outer circumferential surface of the tube 10 and the inner circumferential surface of the fin collar 21 by way of capillary force.

FIG. 7 is a graph showing a ratio of a gap between the fin and the tube and a joining area between the fin collar and the tube in the heat exchanger fabricated according to embodiments. A total area indicates a total area of the outer circumferential surface of the tube 10 that corresponds to the inner circumferential surface of the fin collar 21. The joining area indicates an area of a portion where the molten filler metal 25 connects the outer circumferential surface of the tube 10 and the inner circumferential surface of the fin collar 21.

As shown in FIG. 7, when an interval between the outer circumferential surface of the tube 10 and the inner circumferential surface of the fin collar 21 is approximately 0.15 mm, the joining area of the filler metal 25 through brazing processing is approximately 25% or less than the total area, which means that thermal conductivity is reduced. When an interval between the outer circumferential surface of the tube 10 and the inner circumferential surface of the fin collar 21 is approximately 0.10 mm, the joining area is about approximately 60% of the total area. When an interval between the outer circumferential surface of the tube 10 and the inner circumferential surface of the fin collar 21 is approximately 0.05 mm, the joining area is about approximately 90% of the total area.

From FIG. 7, it can be seen that the joining area is rapidly increased as compared with the total area when an interval between the outer circumferential surface of the tube 10 and the inner circumferential surface of the fin collar 21 is about or approximately 0.10 mm. It is advantageous that the tube 10 inserted into the fin 20 is expanded so that a gap between the tube 10 and the fin 20 is approximately 0.1 mm or less.

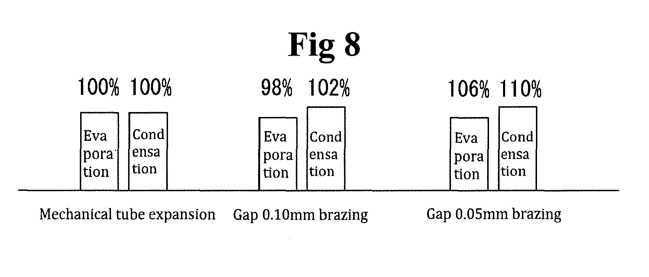

FIG. 8 is a graph showing heat transfer performance of a condenser and an evaporator fabricated according to embodiments compared with that of conventional mechanical tube expansion depending on a different gap between the fin and the tube. If the tube is mechanically expanded, assuming that heat transfer performance of the evaporator and the condenser is 100, an evaporator and a condenser which have been brazed after the tube is expanded so that a gap between the tube 10 and the fin 20 becomes approximately 0.1 mm are 98 and 102 in their performance. An evaporator and a condenser which have been brazed after the tube is expanded so that a gap between the tube 10 and the fin 20 becomes approximately 0.05 mm are 106 and 110 in their performance.

Such improvements of heat transfer performance are attributable to a reduction in contact resistance between the fin and the tube through brazing. The improvements are also attributable to a reduction in deterioration of heat transfer efficiency by reducing the crushing or deformation of grooves within the tube by weakly expanding the tube.

As described above, in accordance with embodiments disclosed herein, contact resistance generated when fabricating a fin-tube heat exchanger using a mechanical tube expansion method may be reduced, and heat transfer performance of a heat exchanger may be improved because grooves formed within a tube are not deformed.

Embodiments disclosed herein improve heat transfer performance of a heat exchanger. Further, embodiments disclosed herein provide a heat exchanger not having a gap between a cooling fin and a tube. Additionally, embodiments disclosed herein provide a heat exchanger in which deformation of grooves within a tube may be reduced.

Embodiments disclosed herein provide a method of manufacturing a heat exchanger that may include inserting a tube into a through hole formed in a fin coated with a filler metal, expanding the tube using a tube expansion ball, and joining the tube and the fin through the filler metal by brazing processing.

Embodiments disclosed herein provide a heat exchanger that may include a tube configured to have a plurality of grooves formed within the tube and crushed by expanding the tube and a plurality of fins each configured to have at least one through hole formed in the fin so that the tube is inserted into the through hole and to have a fin collar vertically bent near the through hole. The plurality of fins into which the tube has been inserted may be disposed in parallel at an interval corresponding to a height of the fin collar, and an inner circumference surface of the fin collar may be joined with an outer circumference surface of the tube by a filler metal.

The tube may be made of aluminum (Al). An interval between the outer circumference surface of the tube and the inner circumference surface of the fin collar of the fin before expanding the tube may be approximately 0.1 mm or more. The tube may be expanded so that an interval between the outer circumference surface of the tube and the inner circumference surface of the fin collar of the fin is approximately 0.1 mm or less. The filler metal may be coated on only one surface of the fin or on only a portion where the through hole may be formed.

The embodiments have been disclosed for illustrative purposes, and those skilled in the art may improve, change, replace, or add various other embodiments within the scope disclosed in the attached claims.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of manufacturing a heat exchanger, the method comprising:
inserting a tube (10) into a through hole (20a) formed in at least one fin (20) coated with a filler metal (25);
expanding the tube; and
joining the tube and the at least one fin through the filler metal by brazing processing.

2. The method of claim 1, wherein the tube is made of aluminum (Al).

3. The method of claim 1 or 2, wherein the at least one fin is made of Al.

4. The method of any one of preceding claims, wherein an interval between an outer circumferential surface of the tube and an inner circumferential surface of a fin collar of the at least one fin before expanding the tube is approximately 0.1 mm or more.

5. The method of claim 4, wherein the fin collar extends at a substantially 90° angle with respect to a central longitudinal axis of the at least one fin.

6. The method of claim 4 or 5, wherein the filler metal is coated on an inner circumferential surface of the fin collar.

7. The method of any one of preceding claims, wherein the expanding of the tube comprises expanding the tube so that an interval between an outer circumferential surface of the tube and an inner circumferential surface of a fin collar of the at least one fin is approximately 0.1 mm or less.

8. The method of any one of preceding claims, wherein the filler metal is coated on only one surface of the at least one fin.

9. The method of claim 8, wherein the filler metal is coated on only a portion of the at least one fin where the through hole is formed.

10. A heat exchanger, comprising:
a tube (10) having a plurality of grooves (12) formed within the tube and deformed by expanding the tube; and
a plurality of fins (20) each configured to have at least one through hole formed in the respective fin, wherein the tube is inserted into the through hole (20a) and each of the plurality of fins has a fin collar (21) vertically bent near the through hole, wherein the plurality of fins into which the tube is inserted is disposed in parallel at an interval corresponding to a height of the respective fin collar, and wherein an inner circumferential surface of each fin collar is joined with an outer circumferential surface of the tube by a filler metal (25).

11. The heat exchanger of claim 10, wherein the tube is made of aluminum (Al) and the plurality of fins is made of Al.

12. The heat exchanger of any one of claim 10 or 11, wherein an interval between the outer circumferential surface of the tube and the inner circumferential surface of each fin collar is approximately 0.1 mm or less.

13. The heat exchanger of any one of claims 10 to 12, wherein the filler metal is coated on only one surface of each of the plurality of fins.

14. The heat exchanger of claim 13, wherein the filler metal is coated on only a portion of each fin where the through hole is formed.

15. The heat exchanger of claim 13, wherein the filler metal is coated on an inner circumferential surface of the fin collar of each of the plurality of fins.
